# EUROPEAN PATENT APPLICATION

(11) **EP 4 319 135 A1**
(43) Date of publication of application: **07.02.2024**
(21) Application number: 22806539.7
(22) Date of filing: 29.04.2022
(51) Int. Cl.: H04N 5/232, H04N 5/265

(54) **IMAGE FUSION METHOD AND APPARATUS, ELECTRONIC DEVICE, AND STORAGE MEDIUM**

(30) Priority: 10.05.2021 CN 202110507863
(71) Applicant: Beijing Zitiao Network Technology Co., Ltd., Beijing 100190 (CN)
(72) Inventor: LIAO, Honghui, Beijing 100086 (CN); SU, Guangying, Beijing 100086 (CN); WANG, Weipeng, Beijing 100086 (CN); WU, Tong, Beijing 100086 (CN); CHEN, Feng, Beijing 100086 (CN); HUANG, Lei, Beijing 100086 (CN); WANG, Bei, Beijing 100086 (CN); XIAO, Yiqi, Beijing 100086 (CN); LIU, Yalong, Beijing 100086 (CN)
(74) Representative: Dentons UK and Middle East LLP
(86) International application number: PCT/CN2022/090126
(87) International publication number: WO 2022/237571

(57) **Abstract**

Provided are an image fusion method and apparatus, an electronic device, and a storage medium. The method includes the following steps: A shooting operation acting on a first page of a target shooting activity is received, where the first page is an H5 page; in response to the shooting operation, a camera is called through system shooting software to collect an original image; a fusion operation for the original image is received; and in response to the fusion operation, the original image is fused with a first target effect, a static target image that includes a static image obtained by fusing the original image with the first target effect and the first description information related to the static image is generated, and the static target image is displayed on a second page, where the second page is an H5 page.

## Description

The present application claims priority to Chinese Patent Application No. 202110507863.8 filed with the China National Intellectual Property Administration (CNIPA) on May 10, 2021, the disclosure of which is incorporated herein by reference in its entirety.

### TECHNICAL FIELD

Embodiments of the present disclosure relate to the field of computer technology, for example, an image fusion method and apparatus, an electronic device, and a storage medium.

### BACKGROUND

At present, when intending to shoot an image including the effect of a certain prop, a user needs to download the application software to which the shooting prop belongs, uses the shooting prop for shooting in the application software, and performs an image fusion through the application software. However, the shooting mode in the related art is cumbersome and has a high demand for the configuration of a user terminal, failing to meet the user's requirement for fast shooting.

### SUMMARY

Embodiments of the present disclosure provide an image fusion method and apparatus, an electronic device, and a storage medium so as to fuse shooting with an image in an H5 page, simplifying an operation required for shooting an image including a shooting effect of a corresponding shooting prop.

In a first aspect, an embodiment of the present disclosure provides an image processing method. The method includes the steps below.

A shooting operation acting on a first page of a target shooting activity is received, where the first page is an HTML 5 (H5) page.

In response to the shooting operation, a camera is called through system shooting software to collect an original image.

A fusion operation for the original image is received.

In response to the fusion operation, the original image is fused with a first target effect, a static target image that includes a static image obtained by fusing the original image with the first target effect and first description information related to the static image is generated, and the static target image is displayed on a second page, where the second page is an H5 page.

In a second aspect, an embodiment of the present disclosure provides an image fusion apparatus. The apparatus includes a first receiving module, an image collection module, a second receiving module, and an image fusion module.

The first receiving module is configured to receive a shooting operation acting on a first page of a target shooting activity, where the first page is an H5 page.

The image collection module is configured to, in response to the shooting operation, call a camera through system shooting software to collect an original image.

The second receiving module is configured to receive a fusion operation for the original image.

The image fusion module is configured to, in response to the fusion operation, fuse the original image with a first target effect, generate a static target image that includes a static image obtained by fusing the original image with the first target effect and first description information related to the static image, and display the static target image on a second page, where the second page is an H5 page.

In a third aspect, an embodiment of the present disclosure further provides an electronic device. The electronic device includes at least one processor and a memory configured to store at least one program.

The at least one program is executed by the at least one processor to cause the at least one processor to implement the image fusion method according to an embodiment of the present disclosure.

In a fourth aspect, an embodiment of the present disclosure further provides a computer-readable storage medium for storing a computer program. When the computer program is executed by a processor, the image fusion method according to an embodiment of the present disclosure is performed.

### BRIEF DESCRIPTION OF DRAWINGS

The same or similar reference numerals in the drawings denote the same or similar elements. It is to be understood that the drawings are schematic and that originals and elements are not necessarily drawn to scale.
FIG. 1 is a flowchart of an image fusion method according to an embodiment of the present disclosure.
FIG. 2 is a schematic diagram of a first page according to an embodiment of the present disclosure.
FIG. 3 is a schematic diagram of a third page according to an embodiment of the present disclosure.
FIG. 4 is a schematic diagram of a nickname page according to an embodiment of the present disclosure.
FIG. 5 is a schematic diagram of a second page according to an embodiment of the present disclosure.
FIG. 6 is a schematic diagram of an image selection page according to an embodiment of the present disclosure.
FIG. 7 is a flowchart of another image fusion method according to an embodiment of the present disclosure.
FIG. 8 is a schematic diagram of a prop page according to an embodiment of the present disclosure.
FIG. 9 is a block diagram of an image fusion apparatus according to an embodiment of the present disclosure.
FIG. 10 is a structural diagram of an electronic device according to an embodiment of the present disclosure.

### DETAILED DESCRIPTION

Embodiments of the present disclosure are described in more detail hereinafter with reference to the drawings.

It is to be understood that the various steps recited in the method embodiments of the present disclosure may be performed in a different order, and/or in parallel. Additionally, the method embodiments may include additional steps and/or omit the steps shown. The scope of the present disclosure is not limited in this respect.

The term "includes" or its variant used herein means "includes, but is not limited to". The term "based on" means "at least partially based on". The term "an embodiment" means "at least one embodiment". The term "another embodiment" means "at least one other embodiment". The term "some embodiments" means "at least some embodiments". Related definitions of other terms are given in the description hereinafter.

It is to be noted that references to "first", "second" and the like in the present disclosure are merely intended to distinguish one from another apparatus, module, or unit and are not intended to limit the order or interrelationship of the functions performed by the apparatus, module, or unit.

It is to be noted that references to modifications of "one" or "a plurality" in the present disclosure are intended to be illustrative and not limiting, and that those skilled in the art should understand that "at least one" is intended unless the context clearly indicates otherwise.

The names of messages or information exchanged between apparatuses in embodiments of the present disclosure are illustrative and not to limit the scope of the messages or information.

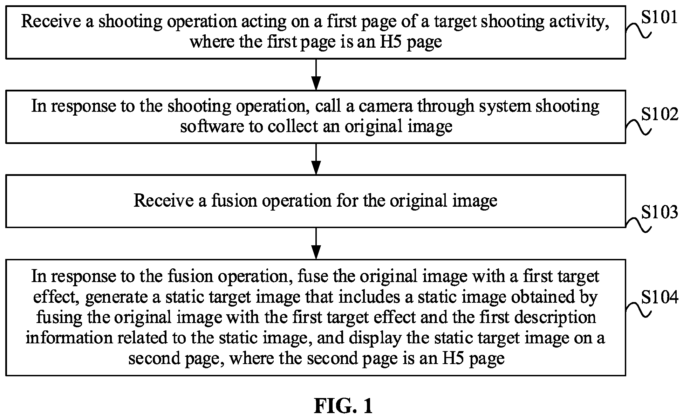

FIG. 1 is a flowchart of an image fusion method according to an embodiment of the present disclosure. The method may be performed by an image fusion apparatus. The apparatus may be implemented in software and/or hardware and may be configured in an electronic device. Typically, the apparatus may be configured in a mobile phone or a tablet computer. The image fusion method provided in the present disclosure is applied to a scenario in which content having a special effect is shot. As shown in FIG. 1, the image fusion method according to this embodiment may include the steps below.

In S 101, a shooting operation acting on a first page of a target shooting activity is received, where the first page is an HTML 5 (H5) page.

The target shooting activity may be a shooting activity that is participated in by a user and is displayed on the H5 page. For example, the target shooting activity is a shooting activity associated with a preset event, such as a shooting activity associated with a recent event or an event occurring in the same period, so as to guide the user to pay attention to the preset event. The target shooting activity is described hereinafter with an example in which the target shooting activity is a shooting activity associated with the preset event of landing on Mars. Here the target shooting activity may be displayed in the manner of a topic, a special subject, or a trend. That is, an activity page on which the activity information of the target shooting activity is displayed to enable the user to understand and participate in the target shooting activity may include pages such as a topic page, a special subject page, and/or a trending page. The first page may be a page displayed when the user participates in the target shooting activity, for example, an image selection page. Accordingly, the shooting operation may be a trigger operation acting on a shooting control on the first page, for example, an operation of clicking the shooting control on the first page.

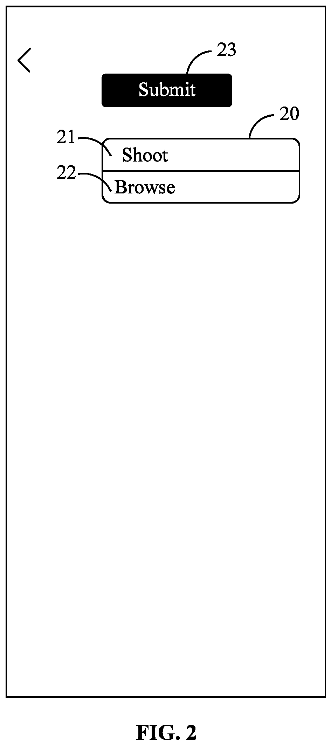

Illustratively, as shown in FIG. 2, the electronic device displays the first page of the target shooting activity in the form of an H5 page and displays an image selection window 20 on the first page to enable the user to perform triggering to select or shoot an image. Therefore, when intending to shoot an image, the user may trigger the shooting control 21 in the image selection window 20. Accordingly, when detecting that the user triggers the shooting control 21, the electronic device may determine that the shooting operation for the target shooting activity is received. Alternatively, when intending to use a pre-shot image for participating in the target shooting activity, the user may trigger a browse control 22 in the image selection window 20. When detecting that the user triggers the browse control 22, the electronic device may display a local album of the user based on the authorization of the user or may display a cloud album of the user based on the authorization of the user. Therefore, the user may select an image from the local album and/or the cloud album to participate in the target shooting activity. Accordingly, the electronic device may use the image selected by the user as an original image, fuse the original image with a first target effect of the target shooting activity when receiving a fusion operation for the original image, and display a static image obtained by fusing the original image with the first target effect of the target shooting activity.

In an embodiment, before the shooting operation acting on the first page of the target shooting activity is received, the method further includes the following steps: A fourth trigger operation of participating in the target shooting activity is received; and in response to the fourth trigger operation, a third page of the target shooting activity is displayed, and a loading animation of the target shooting activity, a background introduction animation of the target shooting activity, and an activity guide animation of the target shooting activity are displayed on the third page sequentially, where the third page is an H5 page.

The fourth trigger operation may be an operation in which the user participates in the target shooting activity, for example, an operation in which a participation control corresponding to the target shooting activity is triggered or an operation in which the activity information (for example, an activity name or activity introduction information) of the target shooting activity is triggered, which is not limited in this embodiment. The third page may include a page used for playing the loading animation of the target shooting activity, the background introduction animation of the target shooting activity, and/or the activity guide animation of the target shooting activity. The loading animation may be an animation played in the process of loading the target shooting activity and may include the loading progress of the target shooting activity. The background introduction animation may be an animation used for introducing the story background of the target shooting activity. The activity guide animation may be an animation that guides the user to participate in the target shooting activity and perform a subsequent operation.

Illustratively, the electronic device displays the activity information of the target shooting activity on the displayed activity page in the form of an H5 page. When intending to participate in the target shooting activity and produce an image matching the target shooting activity, for example, when intending to participate in the shooting activity of the preset event of landing on Mars and produce a static target image including a static image of an astronaut image, the user triggers the participation control of the target shooting activity (regarding the case where the participation control of the target shooting activity is provided on the activity page) or triggers a display region of the activity information of the target shooting activity on a shooting page. Accordingly, when detecting that the user triggers the participation control of the target shooting activity or when detecting a trigger operation acting on the display region of the activity information of the target shooting activity, the electronic device determines that the fourth trigger operation of participating in the target shooting activity is received, loads the target shooting activity in response to the fourth trigger operation, switches the currently displayed activity page to the third page of the target shooting activity, and plays the loading animation of the target shooting activity on the third page. When the loading of the target shooting activity is completed, the electronic device stops playing the loading animation of the target shooting activity, continues to play the background introduction animation of the current playing activity so as to introduce the story background of the target shooting activity to the user, and continues to play the activity guide animation of the target shooting activity after the play of the background introduction animation is completed. Through the activity guide animation, the user is guided to perform a subsequent operation so as to participate in the target shooting activity.

In the preceding solutions, the user may also set a nickname for the user participating in the target shooting activity. In this case, the image fusion method according to this embodiment may further include the following steps: A fifth trigger operation acting on a confirmation control on the third page is received, where the confirmation control is displayed when the activity guide animation is played; and in response to the fifth trigger operation, a nickname page is displayed to enable the user to enter a character nickname on the nickname page or to select an alternative nickname on the nickname page as the character nickname, where the nickname page is an H5 page.

The fifth trigger operation may be an operation of triggering the confirmation control displayed on the third page. The confirmation control may be displayed during the process of playing the activity guide animation of the target shooting activity or after the first play of the activity guide animation of the target shooting activity.

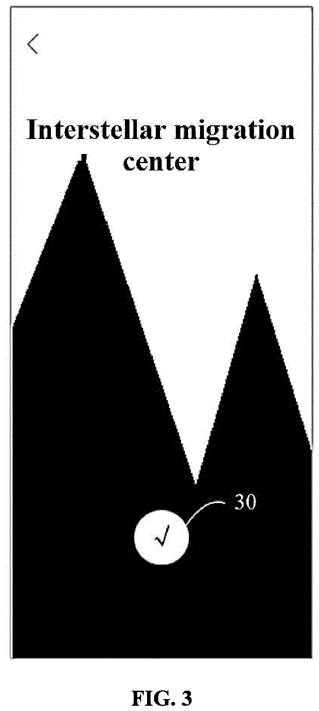

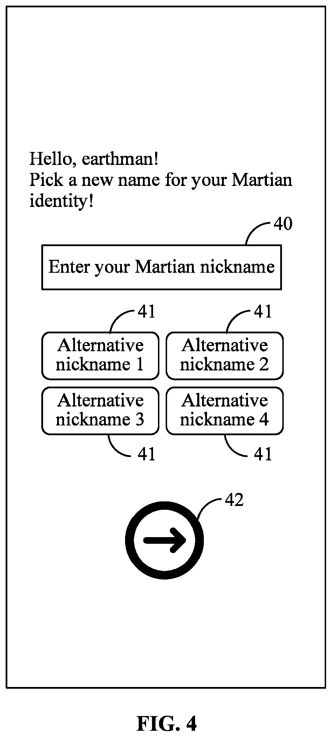

Illustratively, the electronic device displays the loading animation of the target shooting activity, the background introduction animation of the target shooting activity, and the activity guide animation of the target shooting activity sequentially on the third page, displays the confirmation control 30 during the process of playing the activity guide animation or after the first play of the activity guide animation, which is shown in FIG. 3 (FIG. 3 illustrates an example in which the target shooting activity is the shooting activity associated with the preset event of landing on Mars and in which the generated static target image is the user's visa on Mars). Then, the electronic device continues to loop the activity guide animation on the third page after the first play of the activity guide animation until another page is switched to or until the activity guide animation is stopped. Therefore, when confirming the participation in the target shooting activity, the user may trigger the confirmation control 30. Accordingly, when detecting that the user triggers the confirmation control 30 on the third page, the electronic device determines that the fifth trigger operation is received. Moreover, in response to the fifth trigger operation, the currently displayed third page is switched to the nickname page, as shown in FIG. 4. Further, the user may input, in a nickname input region 40 of the nickname page, the character nickname for the user participating in the target shooting activity or directly select a certain alternative nickname 41 displayed on the nickname page as the character nickname for the user participating in the target shooting activity. Accordingly, the electronic device may determine that the nickname input by the user in the input region 40 or the alternative nickname 41 selected by the user serves as the nickname (that is, the character nickname) for the user participating in the target shooting activity.

In S102, in response to the shooting operation, a camera is called through system shooting software to collect the original image.

The system shooting software may be the software that is configured in an application system of the electronic device and is used for shooting by the user. The original image may be understood as an image before a fusion and for the participation in the target shooting activity and may be any image that meets the requirements of the target shooting activity. For example, when the target shooting activity requires that a scenery image or an image of a certain type of scenery is shot, the original image may be a scenery image or an image of the corresponding type of scenery. When the target shooting activity requires that a character image or a face image is shot, the original image may be a corresponding character image or a corresponding face image.

Illustratively, when receiving the shooting operation for the target shooting activity, the electronic device may call the system shooting software of the electronic device to shoot the original image in response to the shooting operation. By way of example, the target shooting activity is the shooting activity that is used for producing the static target image including the static image of an astronaut image and is associated with the preset event of landing on Mars. When receiving the shooting operation for the shooting activity associated with the preset event of landing on Mars, the electronic device may start the system shooting software of the electronic device and start the camera (for example, a front camera) through the system shooting software so as to shoot the character image of the user. In this case, the face image of the user is shot to serve as the original image. For example, a shooting page of the system shooting software may be displayed. Moreover, when it is detected that the user triggers the shooting control on the shooting page of the system shooting software, an image is shot through the started camera. After shooting is completed, the electronic device returns to the first page. The shot original image is displayed on the first page.

In S 103, a fusion operation for the original image is received.

The fusion operation for the original image may be understood as a trigger operation for instructing the electronic device to fuse the original image with the first target effect of the target shooting activity, for example, an operation for triggering a submission control displayed on the first page. Illustratively, the electronic device displays the first page and displays the submission control 23 on the first page, as shown in FIG. 2. Therefore, after selecting or collecting the original image, the user may trigger the submission control 23 on the first page. Accordingly, when detecting that the user triggers the submission control 23, the electronic device determines that the fusion operation for the original image is received.

In S 104, in response to the fusion operation, the original image is fused with the first target effect, a static target image that includes a static image obtained by fusing the original image with the first target effect and the first description information related to the static image is generated, and the static target image is displayed on a second page, where the second page is an H5 page.

The first target effect may be understood as an effect that is set in the target shooting activity and is used for a fusion with the original image shot by the user, for example, a certain character image set in the target shooting activity. The first target effect may be a default effect set in the target shooting activity or may be an effect selected by the user in the target shooting activity. The target image may be an image corresponding to the target shooting activity, for example, when the target shooting activity is the shooting activity associated with the preset event of landing on Mars, the image may be the user's visa on Mars. Accordingly, the static target image may be a target image in which the included image obtained by fusing is a static image, for example, a static visa. The first description information may be the description information related to the generated static image. For example, the first description information may include the description information (for example, the character name and the related description of the user's participation in the target shooting activity) of the user who shoots the original image before the fusion of the static image or the description information for describing a character included in the static image. The second page may be understood as a display page of the generated static target image. The static target image may include the static image obtained by fusing the original image with the first target effect and the first description information related to the static image.

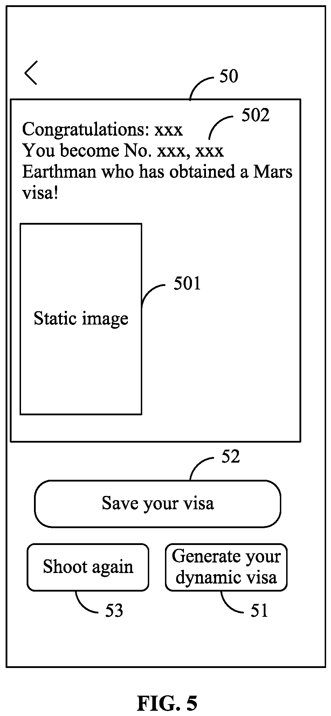

Illustratively, when receiving the fusion operation for the original image, the electronic device fuses the original image with the first target effect of the target shooting activity to obtain the static image, generates the static target image that includes the static image, and displays the static target image on the second page, as shown in FIG. 5 (FIG. 5 illustrates an example in which the target image is the user's visa 50 on Mars, and FIG. 5 does not provide any information, included in the visa 50, other than the static image 501 and the first description information 502 related to the static image).

In an embodiment, before the shooting operation acting on the first page of the target shooting activity is received, the method further includes the following steps: An effect selection page of the target shooting activity is displayed, and at least one shooting effect of the target shooting activity is displayed on the effect selection page; and in response to a selection operation of any shooting effect on the effect selection page, a shooting effect corresponding to the selection operation is determined as the first target effect.

The first target effect may be a shooting effect selected by the user. The shooting effect may be, for example, a character image (for example, an astronaut image), an animal image, or a shooting effect of another type. The selection operation may be understood as an operation in which the user confirms the selection of the first target effect, for example, an operation of triggering a selection confirmation control on the effect selection page.

In the preceding embodiment, the original image shot by the user may be fused with the shooting effect selected by the user so that the image obtained by fusing matches preferences of the user better.

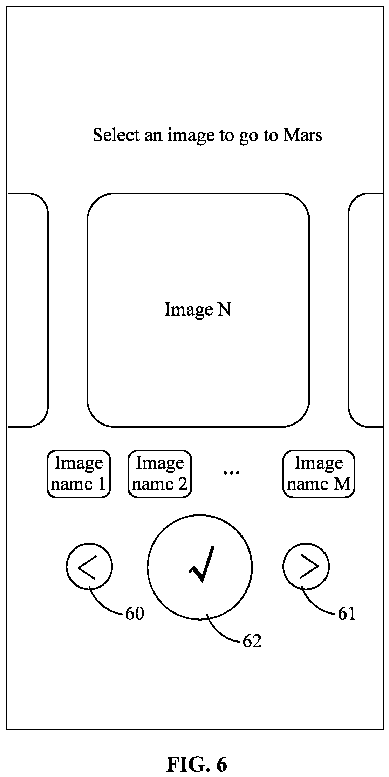

Illustratively, when receiving a trigger operation of displaying an image selection page, for example, when receiving a trigger operation acting on a next control 42 (as shown in FIG. 4) on the nickname page, the electronic device displays the effect selection page and displays, on the effect selection page, the shooting effect set in the target shooting activity, as shown in FIG. 6 (FIG. 6 illustrates an example in which the shooting effect is a character image). Therefore, the user may view and select different shooting effects through a left-right sliding operation or by triggering a left control 60 on the effect selection page or a right control 61 on the effect selection page and may trigger the selection confirmation control 62 on the effect selection page when the selection is completed. Accordingly, the electronic device may switch the shooting effect displayed on the effect selection page and in the selected state based on the left-right sliding operation of the user or based on the operation of the user triggering the left control 60/right control 61 on the effect selection page and may play the preset background music of the shooting effect in the selected state. Moreover, when detecting that the user triggers the selection confirmation control 62 on the effect selection page, the electronic device determines the shooting effect in the selected state at the current moment as the first target effect. The preset background music of at least one shooting effect may be preset by a developer according to requirements. Different shooting effects may have different preset background music.

Additionally, when detecting that the user triggers the selection confirmation control on the effect selection page, the electronic device may also switch the currently displayed effect selection page to a shooting guide page of the target shooting activity, play a shooting guide animation on the shooting guide page, and guide the user through the shooting guide animation to shoot the original image, for example, a character image. Moreover, when detecting that the user triggers a shooting confirmation control on the shooting guide page, the electronic device may switch the currently displayed shooting guide page to the first page of the target shooting activity so that the user performs the shooting operation on the first page to instruct the electronic device to call the camera through the system shooting software to collect the original image.

For the image fusion method according to this embodiment, the shooting operation acting on the first page of the target shooting activity is received; in response to the shooting operation, the camera is called through the system shooting software to collect the original image; the fusion operation for the original image is received; and in response to the fusion operation, the original image is fused with the first target effect, the static target image that includes the static image obtained by fusing the original image with the first target effect and the first description information related to the static image is generated, and the static target image is displayed on the second page. The first page and the second page are each an H5 page. With the adoption of the preceding technical solutions in this embodiment, H5 pages are used for receiving the shooting operation of the user, performing an image fusion, and displaying the static target image including the static image obtained by fusing the original image with the first target effect and the description information related to the static image. The shooting and the fusion are performed without calling a corresponding shooting prop in the application software, reducing operations required by the shooting and the image fusion, enabling the user to have an immersive experience, and improving the user's enthusiasm for participating in the target shooting activity. Moreover, since the shooting is performed without calling the shooting prop in the application software, the requirements for the configuration of a user terminal can be reduced, improving the participation of the target shooting activity.

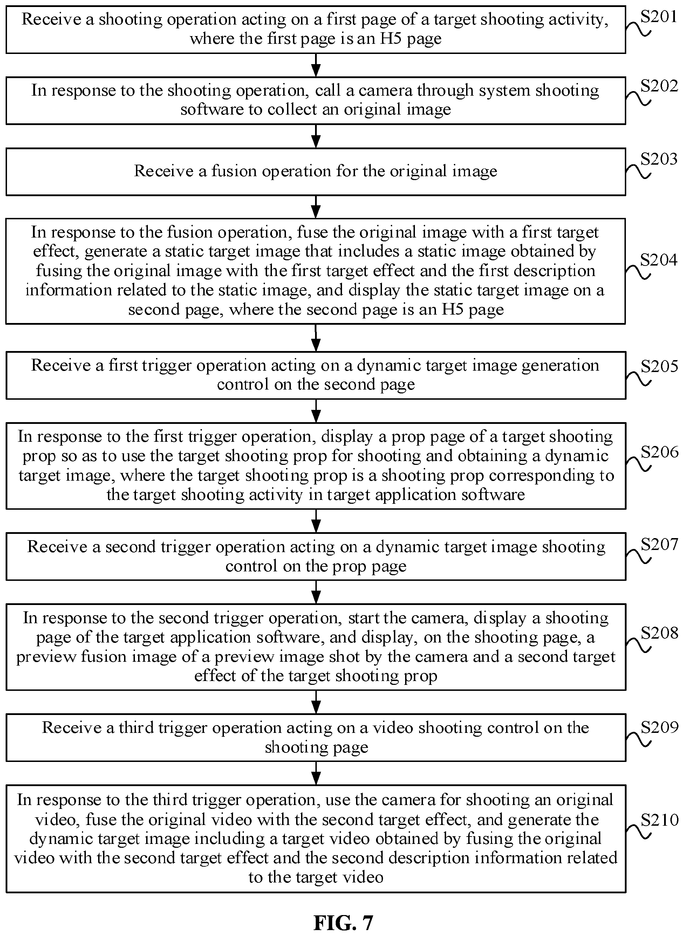

FIG. 7 is a flowchart of another image fusion method according to an embodiment of the present disclosure. Solutions in the embodiment may be combined with at least one optional solution in the preceding embodiment. After the static target image is displayed on the second page, the method further includes the following steps: A first trigger operation acting on a dynamic target image generation control on the second page is received; and in response to the first trigger operation, a prop page of a target shooting prop is displayed so as to use the target shooting prop for shooting and obtaining a dynamic target image, where the target shooting prop is a shooting prop corresponding to the target shooting activity in target application software.

After the prop page of the target shooting prop is displayed, the method further includes the following steps: A second trigger operation acting on a dynamic target image shooting control on the prop page is received; in response to the second trigger operation, the camera is started, a shooting page of the target application software is displayed, and a preview fusion image of a preview image shot by the camera and a second target effect of the target shooting prop is displayed on the shooting page; a third trigger operation acting on a video shooting control on the shooting page is received; and in response to the third trigger operation, the camera is used for shooting an original video, the original video is fused with the second target effect, and the dynamic target image including a target video obtained by fusing the original video with the second target effect and the second description information related to the target video is generated.

Accordingly, as shown in FIG. 7, the image fusion method according to this embodiment may include the steps below.

In S201, a shooting operation acting on a first page of a target shooting activity is received, where the first page is an H5 page.

In S202, in response to the shooting operation, a camera is called through system shooting software to collect an original image.

In S203, a fusion operation for the original image is received.

In S204, in response to the fusion operation, the original image is fused with a first target effect, a static target image that includes a static image obtained by fusing the original image with the first target effect and the first description information related to the static image is generated, and the static target image is displayed on a second page, where the second page is an H5 page.

In S205, a first trigger operation acting on a dynamic target image generation control on the second page is received.

In S206, in response to the first trigger operation, a prop page of a target shooting prop is displayed so as to use the target shooting prop for shooting and obtaining a dynamic target image, where the target shooting prop is a shooting prop corresponding to the target shooting activity in target application software.

The first trigger operation may be an operation of triggering the dynamic target image generation control displayed on the second page, for example, an operation of clicking the dynamic target image generation control. The target shooting prop is a shooting prop corresponding to the target shooting activity. Accordingly, the target application software is the application software to which the target shooting prop belongs, that is, the application software provided with the target shooting prop.

Illustratively, as shown in FIG. 5, the electronic device displays the generated static target image and the dynamic target image generation control 51 on the second page. Therefore, when intending to acquire the dynamic target image, the user may trigger the dynamic target image generation control 51. Accordingly, when detecting that the user triggers the dynamic target image generation control 51, the electronic device determines that the first trigger operation is received. Moreover, in response to the first trigger operation, the electronic device starts the target application software and displays the prop page of the target shooting prop in the target application software to enable the user to shoot and generate the dynamic target image in the target application software. Additionally, as shown in FIG. 5, the second page may be also provided with an image-saving control 52 and a shooting-again control 53. Therefore, the user may save the target image displayed on the second page by triggering the image-saving control 52, and the user may instruct, by triggering the shooting-again control 53, the electronic device to display a shooting guide page or the first page so as to enable the user to re-select or shooting-again the original image.

In S207, a second trigger operation acting on a dynamic target image shooting control on the prop page is received.

In S208, in response to the second trigger operation, the camera is started, a shooting page of the target application software is displayed, and a preview fusion image of a preview image shot by the camera and a second target effect of the target shooting prop is displayed on the shooting page. The second trigger operation may be an operation of triggering the dynamic target image shooting control on the prop page of the target shooting prop. The second target effect may be a shooting effect of the target shooting prop selected on the shooting page of the target application software by the user. The second target effect may be the same as or different from the first target effect, which is determined according to the selection operation of the user. The preview fusion image may be understood as an image formed by fusing the preview image shot by the camera and the second target effect.

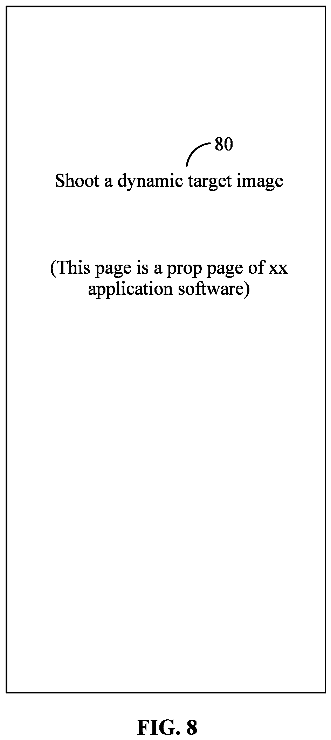

Illustratively, as shown in FIG. 8, the electronic device displays the prop page of the target shooting prop and displays the dynamic target image shooting control 80 on the prop page. Therefore, when intending to use the target shooting prop for shooting a dynamic image, the user may trigger the dynamic target image shooting control 80. Accordingly, when detecting that the user triggers the dynamic target image shooting control 80, the electronic device determines that the second trigger operation is received. Moreover, in response to the second trigger operation received in the target application software, the electronic device starts the camera, displays the shooting page of the target application software, and displays, on the shooting page, the preview fusion image of the preview image collected by the camera and the second target effect of the target shooting prop to facilitate the viewing of the user.

In this embodiment, the second target effect may be determined based on a corresponding trigger operation of the user. For example, at least one effect identifier of at least one shooting effect (for example, a character image) included in the target shooting prop may be displayed on the shooting page; when it is detected that the user clicks an effect identifier of a certain shooting effect, the shooting effect is determined as the second target effect; and the second target effect is displayed on the shooting page. Alternatively, when an effect switching operation of the user is received, a shooting effect to be switched to is determined according to a preset switching order; the shooting effect to be switched to serves as the second target effect; and the second target effect is displayed on the shooting page.

In S209, a third trigger operation acting on a video shooting control on the shooting page is received.

In S210, in response to the third trigger operation, the camera is used for shooting an original video, the original video is fused with the second target effect, and the dynamic target image including a target video obtained by fusing the original video with the second target effect and the second description information related to the target video is generated.

The third trigger operation may be an operation of triggering the video shooting control displayed on the shooting page, for example, an operation of clicking or long-pressing the video shooting control. The original video may be understood as a video shot by the camera. The target video may be understood as a video obtained by fusing the original video with the second target effect. The second description information may be the description information related to the target video, for example, the description information (for example, the character name and the related description of the user's participation in the target shooting activity) of the user who shoots the original video before the fusion of the target video or the description information for describing a character included in the target video. The second description information may be the same as or different from the first description information.

Illustratively, the electronic device displays the shooting page of the target application software. Therefore, when intending to use the second target effect for shooting the second target effect, the user may trigger the video shooting control on the shooting page. Accordingly, when detecting that the user triggers the video shooting control on the shooting page, the electronic device may control the camera to shoot the original video and fuse the original video with the second target effect. For example, when the original video is a face video, the electronic device may perform a face fusion. In this case, the electronic device may obtain the fused target video, generate the dynamic target image including the target video (for example, a dynamic video including the second description information), and display the dynamic target image. Alternatively, a publishing page is switched to so that the user publishes the dynamic target image through the target application software.

It is to be noted that after generating the dynamic target image, the electronic device may return to the H5 page again. For example, the current display page is switched to the second page, and the generated dynamic target image is displayed on the second page. Alternatively, the electronic device may display the generated dynamic target image on an image display page of the target application software. After the user publishes the dynamic target image or when the user exits from the shooting page of the target application software, the current display page is switched to another page of the target application software, for example, the current display page is switched to a video play page of the target application software so as to play, on the video play page, a video in a video stream corresponding to the video play page, which is not limited in this embodiment.

For the image fusion method according to this embodiment, the generated static target image can be displayed on the H5 page. Moreover, the dynamic target image is shot through the target shooting prop in the target application software based on the trigger operation of the user, meeting different shooting requirements of the user and improving the shooting experience of the user.

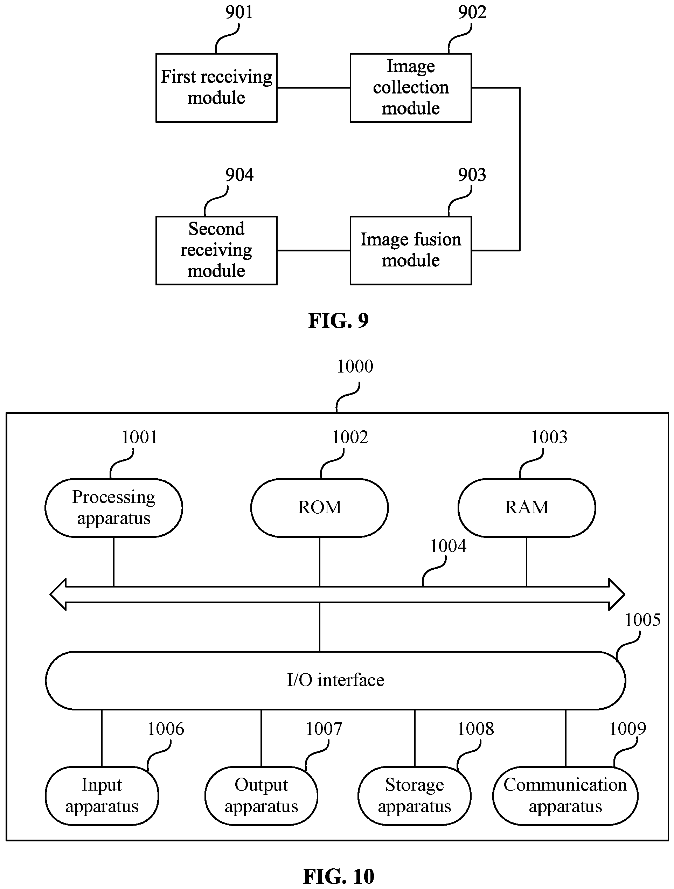

FIG. 9 is a block diagram of an image fusion apparatus according to an embodiment of the present disclosure. The apparatus may be implemented by software and/or hardware and may be configured in an electronic device. Typically, the apparatus may be configured in a mobile phone or a tablet computer, and may implement an image fusion by performing an image fusion method. As shown in FIG. 9, the image fusion apparatus according to this embodiment may include a first receiving module 901, an image collection module 902, a second receiving module 903, and an image fusion module 904.

The first receiving module 901 is configured to receive a shooting operation acting on a first page of a target shooting activity, where the first page is an H5 page.

The image collection module 902 is configured to, in response to the shooting operation, call a camera through system shooting software to collect an original image.

The second receiving module 903 is configured to receive a fusion operation for the original image. The image fusion module 904 is configured to, in response to the fusion operation, fuse the original image with a first target effect, generate a static target image that includes a static image obtained by fusing the original image with the first target effect and the first description information related to the static image, and display the static target image on a second page, where the second page is an H5 page.

For the image fusion apparatus according to this embodiment, the first receiving module receives the shooting operation acting on the first page of the target shooting activity; the image collection module, in response to the shooting operation, calls the camera through the system shooting software to collect the original image; the second receiving module receives the fusion operation for the original image; and the image fusion module fuses the original image with the first target effect, generates the static target image that includes the static image obtained by fusing the original image with the first target effect and the first description information related to the static image, and displays the static target image on the second page. The first page and the second page are each an H5 page. With the adoption of the preceding technical solutions in this embodiment, H5 pages are used for receiving the shooting operation of the user, performing an image fusion, and displaying the static target image including the static image obtained by fusing the original image with the first target effect and the description information related to the static image. The shooting and the fusion are performed without calling a corresponding shooting prop in the application software, reducing operations required by the shooting and the image fusion, enabling the user to have an immersive experience, and improving the user's enthusiasm for participating in the target shooting activity. Moreover, since the shooting is performed without calling the shooting prop in the application software, the requirements for the configuration of a user terminal can be reduced, improving the participation of the target shooting activity.

The image fusion apparatus according to this embodiment may further include a third receiving module and a prop page display module. The third receiving module is configured to, after the static target image is displayed on the second page, receive a first trigger operation acting on a dynamic target image generation control on the second page. The prop page display module is configured to, in response to the first trigger operation, display a prop page of a target shooting prop so as to use the target shooting prop for shooting and obtaining a dynamic target image, where the target shooting prop is a shooting prop corresponding to the target shooting activity in target application software.

The image fusion apparatus according to this embodiment may further include a fourth receiving module, an effect preview module, a fifth receiving module, and a video fusion module. The fourth receiving module is configured to, after the prop page of the target shooting prop is displayed, receive a second trigger operation acting on a dynamic target image shooting control on the prop page. The effect preview module is configured to, in response to the second trigger operation, start the camera, display a shooting page of the target application software, and display, on the shooting page, a preview fusion image of a preview image shot by the camera and a second target effect of the target shooting prop. The fifth receiving module is configured to receive a third trigger operation acting on a video shooting control on the shooting page. The video fusion module is configured to, in response to the third trigger operation, use the camera for shooting an original video, fuse the original video with the second target effect, and generate the dynamic target image including a target video obtained by fusing the original video with the second target effect and the second description information related to the target video.

The image fusion apparatus according to this embodiment may further include an effect display module and an effect determination module. The effect display module is configured to, before the shooting operation acting on the first page of the target shooting activity is received, display an effect selection page of the target shooting activity and display at least one shooting effect of the target shooting activity on the effect selection page. The effect determination module is configured to, in response to a selection operation of any shooting effect on the effect selection page, determine a shooting effect corresponding to the selection operation as the first target effect. The image fusion apparatus according to this embodiment may further include a sixth receiving module and an animation play module. The sixth receiving module is configured to, before the shooting operation acting on the first page of the target shooting activity is received, receive a fourth trigger operation of participating in the target shooting activity. The animation play module is configured to, in response to the fourth trigger operation, display a third page of the target shooting activity and display a loading animation of the target shooting activity, a background introduction animation of the target shooting activity, and an activity guide animation of the target shooting activity on the third page sequentially, where the third page is an H5 page.

The image fusion apparatus according to this embodiment may further include a seventh receiving module and a nickname page display module. The seventh receiving module is configured to receive a fifth trigger operation acting on a confirmation control on the third page, where the confirmation control is displayed when the activity guide animation is played. The nickname page display module is configured to, in response to the fifth trigger operation, display a nickname page to enable the user to enter a character nickname on the nickname page or to select an alternative nickname on the nickname page as the character nickname, where the nickname page is an H5 page.

The image fusion apparatus according to this embodiment of the present disclosure may perform the image fusion method according to any embodiment of the present disclosure and has corresponding functional modules for performing the image fusion method. For technical details not described in detail in this embodiment, reference may be made to the image fusion method according to any embodiment of the present disclosure.

Referring to FIG. 10, FIG. 10 shows a structural diagram of an electronic device (such as a terminal device) 1000 suitable for implementing embodiments of the present disclosure. The terminal device in embodiments of the present disclosure may include, but is not limited to, mobile terminals such as a mobile phone, a laptop, a digital broadcast receiver, a personal digital assistant (PDA), a portable Android device (PAD), a portable media player (PMP), and an in-vehicle terminal (such as an in-vehicle navigation terminal) and stationary terminals such as a digital television (TV) and a desktop computer. The electronic device shown in FIG. 10 is merely an example and is not intended to limit the function and use scope of the embodiments of the present disclosure.

As shown in FIG. 10, the electronic device 1000 may include a processing apparatus (such as a central processing unit or a graphics processing unit) 1001. The processing apparatus 1001 may perform various proper actions and processing according to a program stored in a read-only memory (ROM) 1002 or a program loaded into a random-access memory (RAM) 1003 from a storage apparatus 1006. Various programs and data required for operations of the electronic device 1000 are also stored in the RAM 1003. The processing apparatus 1001, the ROM 1002, and the RAM 1003 are connected to each other through a bus 1004. An input/output (I/O) interface 1005 is also connected to the bus 1004.

Generally, the following apparatuses may be connected to the I/O interface 1005: an input apparatus 1006 such as a touch screen, a touchpad, a keyboard, a mouse, a camera, a microphone, an accelerometer, or a gyroscope; an output apparatus 1007 such as a liquid crystal display (LCD), a speaker, or a vibrator; the storage apparatus 1006 such as a magnetic tape or a hard disk; and a communication apparatus 1009. The communication apparatus 1009 may allow the electronic device 1000 to perform wireless or wired communication with other devices to exchange data. Although FIG. 10 shows the electronic device 1000 having various apparatuses, it is to be understood that it is not required to implement or have all the shown apparatuses. Alternatively, more or fewer apparatuses may be implemented or available.

Particularly, according to embodiments of the present disclosure, the processes described above with reference to the flowcharts may be implemented as computer software programs. For example, a computer program product is provided in embodiments of the present disclosure. The computer program product includes a computer program carried on a non-transitory computer-readable medium. The computer program includes program codes for performing the methods illustrated in the flowcharts. In such an embodiment, the computer program may be downloaded and installed from a network through the communication apparatus 1009, installed from the storage apparatus 1006, or installed from the ROM 1002. When the computer program is executed by the processing apparatus 1001, the preceding functions defined in the methods in embodiments of the present disclosure are implemented.

It is to be noted that the preceding computer-readable medium in the present disclosure may be a computer-readable signal medium or a computer-readable storage medium or any combination thereof. For example, the computer-readable storage medium may be, but is not limited to, an electrical, magnetic, optical, electromagnetic, infrared or semiconductor system, apparatus or device or any combination thereof. Specifically, the computer-readable storage medium may include, but is not limited to, an electrical connection having one or more wires, a portable computer disk, a hard disk, a random access memory (RAM), a read-only memory (ROM), an erasable programmable read-only memory (EPROM) or flash memory, an optical fiber, a portable compact disc read-only memory (CD-ROM), an optical memory device, a magnetic memory device, or any suitable combination thereof. In the present disclosure, the computer-readable storage medium may be any tangible medium including or storing a program that can be used by or in connection with an instruction execution system, apparatus or device. In the present disclosure, the computer-readable signal medium may include a data signal propagated on a baseband or as part of a carrier, where computer-readable program codes are carried in the data signal. The data signal propagated in this manner may be in multiple forms and includes, but is not limited to, an electromagnetic signal, an optical signal, or any suitable combination thereof. The computer-readable signal medium may also be any computer-readable medium except the computer-readable storage medium. The computer-readable signal medium may send, propagate or transmit a program used by or in connection with an instruction execution system, apparatus or device. Program codes included on the computer-readable medium may be transmitted by any suitable medium, including, but not limited to, a wire, an optical cable, a radio frequency (RF), or any suitable combination thereof.

In some embodiments, clients and servers may communicate using any currently known or future developed network protocol, such as the HyperText Transfer Protocol (HTTP), and may be interconnected with any form or medium of digital data communication (such as a communication network). Examples of the communication network include a local area network (LAN), a wide area network (WAN), an internet (for example, the Internet), a peer-to-peer network (for example, an Ad-Hoc network), and any network currently known or to be developed in the future.

The preceding computer-readable medium may be included in the preceding electronic device or may exist alone without being assembled into the electronic device.

The preceding computer-readable medium carries at least one program which, when executed by the electronic device, causes the electronic device to: receive a shooting operation acting on a first page of a target shooting activity, where the first page is an H5 page; in response to the shooting operation, call a camera through system shooting software to collect an original image; receive a fusion operation for the original image; and in response to the fusion operation, fuse the original image with a first target effect, generate a static target image that includes a static image obtained by fusing the original image with the first target effect and the first description information related to the static image, and display the static target image on a second page, where the second page is an H5 page.

Computer program codes for performing the operations in the present disclosure may be written in at least one programming language or combination thereof. The preceding one or more programming languages include, but are not limited to, object-oriented programming languages such as Java, Smalltalk and C++, as well as conventional procedural programming languages such as C or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet through an Internet service provider).

The flowcharts and block diagrams in the drawings show the possible architecture, function and operation of the system, method and computer program product according to various embodiments of the present disclosure. In this regard, each block in the flowcharts or block diagrams may represent a module, program segment, or part of codes, where the module, program segment, or part of codes includes at least one executable instruction for implementing specified logical functions. It is to be noted that in some alternative implementations, the functions marked in the blocks may occur in an order different from that marked in the drawings. For example, two successive blocks may, in practice, be executed substantially in parallel or executed in a reverse order, which depends on the functions involved. It is also to be noted that each block in the block diagrams and/or flowcharts and a combination of blocks in the block diagrams and/or flowcharts may be implemented by a special-purpose hardware-based system executing specified functions or operations or may be implemented by a combination of special-purpose hardware and computer instructions.

The units involved in the embodiments of the present disclosure may be implemented by software or hardware. The name of a module is not intended to limit the unit itself in a certain circumstance. The functions described above herein may be at least partially implemented by at least one hardware logic component. For example, without limitation, example types of hardware logic components that can be used include a field-programmable gate array (FPGA), an application-specific integrated circuit (ASIC), an application-specific standard product (ASSP), a system-on-chip (SoC), a complex programmable logic device (CPLD), and the like.

In the context of the present disclosure, a machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any appropriate combination thereof. Concrete examples of the machine-readable storage medium include an electrical connection based on at least one wire, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any suitable combination thereof.

According to at least one embodiment of the present disclosure, example 1 provides an image fusion method. The method includes the steps below.

A shooting operation acting on a first page of a target shooting activity is received, where the first page is an H5 page.

In response to the shooting operation, a camera is called through system shooting software to collect an original image.

A fusion operation for the original image is received.

In response to the fusion operation, the original image is fused with a first target effect, a static target image that includes a static image obtained by fusing the original image with the first target effect and the first description information related to the static image is generated, and the static target image is displayed on a second page, where the second page is an H5 page.

According to at least one embodiment of the present disclosure, according to the method in example 1, after the static target image is displayed on the second page, example 2 further includes the steps below.

A first trigger operation acting on a dynamic target image generation control on the second page is received.

In response to the first trigger operation, a prop page of a target shooting prop is displayed so as to use the target shooting prop for shooting and obtaining a dynamic target image, where the target shooting prop is a shooting prop corresponding to the target shooting activity in target application software.

According to at least one embodiment of the present disclosure, according to the method in example 2, after the prop page of the target shooting prop is displayed, example 3 further includes the steps below.

A second trigger operation acting on a dynamic target image shooting control on the prop page is received.

In response to the second trigger operation, the camera is started, a shooting page of the target application software is displayed, and a preview fusion image of a preview image shot by the camera and a second target effect of the target shooting prop is displayed on the shooting page. A third trigger operation acting on a video shooting control on the shooting page is received.

In response to the third trigger operation, the camera is used for shooting an original video, the original video is fused with the second target effect, and the dynamic target image including a target video obtained by fusing the original video with the second target effect and the second description information related to the target video is generated.

According to at least one embodiment of the present disclosure, according to the method in any one of examples 1 to 3, before the shooting operation acting on the first page of the target shooting activity is received, example 4 further includes the steps below.

An effect selection page of the target shooting activity is displayed, and at least one shooting effect of the target shooting activity is displayed on the effect selection page.

In response to a selection operation of any shooting effect on the effect selection page, a shooting effect corresponding to the selection operation is determined as the first target effect.

According to at least one embodiment of the present disclosure, according to the method in any one of examples 1 to 3, before the shooting operation acting on the first page of the target shooting activity is received, example 5 further includes the steps below.

A fourth trigger operation of participating in the target shooting activity is received.

In response to the fourth trigger operation, a third page of the target shooting activity is displayed; and a loading animation of the target shooting activity, a background introduction animation of the target shooting activity, and an activity guide animation of the target shooting activity are displayed on the third page sequentially, where the third page is an H5 page.

According to at least one embodiment of the present disclosure, according to the method in example 5, example 6 further includes the steps below.

A fifth trigger operation acting on a confirmation control on the third page is received, where the confirmation control is displayed when the activity guide animation is played.

In response to the fifth trigger operation, a nickname page is displayed to enable a user to enter a character nickname on the nickname page or to select an alternative nickname on the nickname page as the character nickname, where the nickname page is an H5 page.

According to at least one embodiment of the present disclosure, example 7 provides an image fusion apparatus. The apparatus includes a first receiving module, an image collection module, a second receiving module, and an image fusion module.

The first receiving module is configured to receive a shooting operation acting on a first page of a target shooting activity, where the first page is an H5 page.

The image collection module is configured to, in response to the shooting operation, call a camera through system shooting software to collect an original image.

The second receiving module is configured to receive a fusion operation for the original image.

The image fusion module is configured to, in response to the fusion operation, fuse the original image with a first target effect, generate a static target image that includes a static image obtained by fusing the original image with the first target effect and the first description information related to the static image, and display the static target image on a second page, where the second page is an H5 page.

According to at least one embodiment of the present disclosure, according to the apparatus in example 7, example 8 further includes a third receiving module and a prop page display module. The third receiving module is configured to, after the static target image is displayed on the second page, receive a first trigger operation acting on a dynamic target image generation control on the second page.

The prop page display module is configured to, in response to the first trigger operation, display a prop page of a target shooting prop so as to use the target shooting prop for shooting and obtaining a dynamic target image, where the target shooting prop is a shooting prop corresponding to the target shooting activity in target application software.

According to at least one embodiment of the present disclosure, example 9 provides an electronic device. The electronic device includes at least one processor and a memory configured to store at least one program.

The at least one program is executed by the at least one processor to cause the at least one processor to implement the image fusion method according to any one of examples 1 to 6.

According to at least one embodiment of the present disclosure, example 10 provides a computer-readable storage medium for storing a computer program. When the computer program is executed by a processor, the image fusion method according to any one of examples 1 to 6 is performed. Additionally, although operations are depicted in a particular order, this should not be construed as that these operations are required to be performed in the particular order shown or in a sequential order. Under certain circumstances, multitasking and parallel processing may be advantageous. Similarly, although several specific implementation details are included in the preceding discussion, these should not be construed as limitations on the scope of the present disclosure. Certain features described in the context of separate embodiments may also be implemented in combination in a single embodiment. Conversely, various features described in the context of a single embodiment may also be implemented in multiple embodiments individually or in any suitable sub-combination.

Although the subject matter has been described in a language specific to structural features and/or methodological logic acts, it is to be understood that the subject matter defined in the appended claims is not necessarily limited to the particular features or acts described above. Conversely, the particular features and acts described above are merely example forms for implementing the claims.

## Claims

1. An image fusion method, comprising:
receiving a shooting operation acting on a first page of a target shooting activity, wherein the first page is an HTML 5, H5, page;
in response to the shooting operation, calling a camera through system shooting software to collect an original image;
receiving a fusion operation for the original image; and
in response to the fusion operation, fusing the original image with a first target effect, generating a static target image that comprises a static image obtained by fusing the original image with the first target effect and first description information related to the static image, and displaying the static target image on a second page, wherein the second page is an H5 page.

2. The method according to claim 1, after the static target image is displayed on the second page, further comprising:
receiving a first trigger operation acting on a dynamic target image generation control on the second page; and
in response to the first trigger operation, displaying a prop page of a target shooting prop for using the target shooting prop for shooting and obtaining a dynamic target image, wherein the target shooting prop is a shooting prop corresponding to the target shooting activity in target application software.

3. The method according to claim 2, after the prop page of the target shooting prop is displayed, further comprising:
receiving a second trigger operation acting on a dynamic target image shooting control on the prop page;
in response to the second trigger operation, starting the camera; displaying a shooting page of the target application software;
displaying, on the shooting page, a preview fusion image of a preview image shot by the camera and a second target effect of the target shooting prop;
receiving a third trigger operation acting on a video shooting control on the shooting page; and
in response to the third trigger operation, using the camera for shooting an original video, fusing the original video with the second target effect, and generating the dynamic target image comprising a target video obtained by fusing the original video with the second target effect and second description information related to the target video.

4. The method according to any one of claims 1 to 3, before the shooting operation acting on the first page of the target shooting activity is received, further comprising:
displaying an effect selection page of the target shooting activity, and displaying at least one shooting effect of the target shooting activity on the effect selection page; and
in response to a selection operation of any one of the at least one shooting effect on the effect selection page, determining a shooting effect among the at least one shooting effect and corresponding to the selection operation as the first target effect.

5. The method according to any one of claims 1 to 3, before the shooting operation acting on the first page of the target shooting activity is received, further comprising:
receiving a fourth trigger operation of participating in the target shooting activity; and
in response to the fourth trigger operation, displaying a third page of the target shooting activity; and displaying, on the third page, a loading animation of the target shooting activity, a background introduction animation of the target shooting activity, and an activity guide animation of the target shooting activity sequentially, wherein the third page is an H5 page.

6. The method according to claim 5, further comprising:
receiving a fifth trigger operation acting on a confirmation control on the third page, wherein the confirmation control is displayed when the activity guide animation is played; and
in response to the fifth trigger operation, displaying a nickname page to enable a user to enter a character nickname on the nickname page or to select an alternative nickname on the nickname page as the character nickname, wherein the nickname page is an H5 page.

7. An image fusion apparatus, comprising:
a first receiving module configured to receive a shooting operation acting on a first page of a target shooting activity, wherein the first page is an HTML 5, H5, page;
an image collection module configured to, in response to the shooting operation, call a camera through system shooting software to collect an original image;
a second receiving module configured to receive a fusion operation for the original image; and
an image fusion module configured to, in response to the fusion operation, fuse the original image with a first target effect, generate a static target image that comprises a static image obtained by fusing the original image with the first target effect and first description information related to the static image, and display the static target image on a second page, wherein the second page is an H5 page.

8. The apparatus according to claim 7, further comprising:
a third receiving module configured to, after the static target image is displayed on the second page, receive a first trigger operation acting on a dynamic target image generation control on the second page; and
a prop page display module configured to, in response to the first trigger operation, display a prop page of a target shooting prop so as to use the target shooting prop for shooting and obtaining a dynamic target image, wherein the target shooting prop is a shooting prop corresponding to the target shooting activity in target application software.

9. An electronic device, comprising:
at least one processor; and
a memory configured to store at least one program,
wherein the at least one program is executed by the at least one processor to cause the at least one processor to implement the image fusion method according to any one of claims 1 to 6.

10. A computer-readable storage medium for storing a computer program, wherein when the computer program is executed by a processor, the image fusion method according to any one of claims 1 to 6 is performed.
